# EUROPEAN PATENT SPECIFICATION

(11) **EP 2 790 838 B1**
(45) Date of publication and mention of the grant of the patent: **01.02.2017**
(21) Application number: 12857732.7
(22) Date of filing: 13.12.2012
(51) Int. Cl.: B05B 1/28, A01M 7/00, A01C 23/04

(54) **RECAPTURE SPRAYER SHELL**
GEHÄUSE FÜR WIEDERAUFNAHMEZERSTÄUBER
COQUE DE PULVÉRISATEUR À RÉCUPÉRATION

(30) Priority: 13.12.2011 US 201161630475 P
(43) Date of publication of application: 22.10.2014
(73) Proprietor: Genz Corp., Boise, ID 83709 (US)
(72) Inventor: JOHNSON, Richard, Boise, Idaho 83709 (US)
(74) Representative: Lloyd, Robin
(86) International application number: PCT/US2012/069594
(87) International publication number: WO 2013/090639

(56) References cited:
- EP-A1- 0 580 247
- EP-B1- 0 361 070
- WO-A1-2010/000896
- FR-A1- 2 501 461
- FR-A1- 2 854 823
- US-A- 4 134 548
- US-A- 4 893 755
- US-A- 5 323 623
- US-A- 5 730 806
- US-A- 5 897 057
- US-A1- 2005 199 842
- US-A1- 2009 134 237
- US-B1- 6 302 332
- US-B2- 7 143 963

## Description

### TECHNICAL FIELD

The present disclosure relates generally to a system and method for spraying, containing, and recapturing a spray discharge. More particularly, the disclosure relates to a shell that partially encompasses a target object, emits a spray, and mitigates overspray.

### BACKGROUND

Spray recapture systems have been used in the past to prevent overspray of paint, agricultural chemicals including fertilizers, fungicides, herbicides, pesticides, and other types of spray discharge. Typically, traditional recapture systems are limited to small objects or to use in a contained space. Traditional agricultural sprayers may not include means for containment of overspray and accordingly, overspray may escape any target areas, especially if application takes place in a windy outdoor area.

In some cases, spray discharge includes volatile organic compounds ("VOCs"), which may be dangerous to human health and/or the environment. What is needed, therefore, is a method and system of containing and collecting spray while enhancing spray coverage on a target object and minimizing overspray and drippage.

FR2854823 describes a sprayed products recovery device. FR2501461 describes a spraying machine. US 4893755 describes a pesticide spraying apparatus.

### SUMMARY

According to a first aspect of the disclosure there is provided, I a spray recapture shell as claimed in claim 1.

According to a second aspect of the disclosure there is provided, a method of spraying a target object as claimed in claim 10.

The present disclosure will now be described more fully with reference to the accompanying drawings, which are intended to be read in conjunction with both this summary, the detailed description, and any preferred or particular embodiments specifically discussed or otherwise disclosed. This disclosure may, however, be embodied in many different forms and should not be construed as limited to the embodiments set forth herein; rather, these embodiments are provided by way of illustration only so that this disclosure will be thorough, and fully convey the full scope of the disclosure to those skilled in the art.

### BRIEF DESCRIPTION OF THE DRAWINGS

This disclosure may be understood by reference to the following description taken in conjunction with the accompanying drawings, in which like reference numerals identify like elements, and in which:
FIG. 1 is a perspective view of a recapture sprayer shell according to an embodiment of the present disclosure;
FIG. 2 is a side view of a recapture sprayer shell according to an embodiment;
FIG. 3 is a cutaway drawing depicting a bottom-side perspective view of a recapture sprayer shell according to an embodiment;
FIG. 4 is a rear view of a recapture sprayer shell according to an embodiment;
FIG. 5A depicts multiple recapture sprayer shells in use; and
FIG. 5B is an overhead view of multiple recapture sprayer shells in use.

### DETAILED DESCRIPTION

In the following description, reference is made to the accompanying drawings that form a part thereof, and in which is shown by way of illustration specific exemplary embodiments in which the disclosure may be practiced. These embodiments are described in sufficient detail to enable those skilled in the art to practice the concepts disclosed, and it is to be understood that modifications to the various disclosed embodiments may be made, and other embodiments may be utilized, without departing from the scope of the present disclosure. The following detailed description is, therefore, not to be taken in a limiting sense.

An objective of embodiments of the present disclosure is to apply a spray to a target object, contain the spray within a shell, and recapture the spray while minimizing overspray, spill, and loss. In embodiments, the spray comprises a chemical-laden stream of air. Alternatively, the spray comprises a liquid, an aerosol, or a combination thereof. In alternative embodiments, the spray comprises an electrostatic spray. Such embodiments may include one or more nozzle adapted to emit an electrostatic spray. Chemicals may comprise a fertilizer or like plant nutrient, a pesticide, an herbicide, a fungicide, or any other chemical that may be applied by a spray and for which spray recapture is desired. In alternative embodiments, chemical in the spray include paints, de-icing compounds, and the like. Embodiments of the present disclosure comprise a shell adapted to partially encompass a target object. In embodiments, the shell comprises spray nozzles, positive air pressure nozzles, and spray recapture ports.

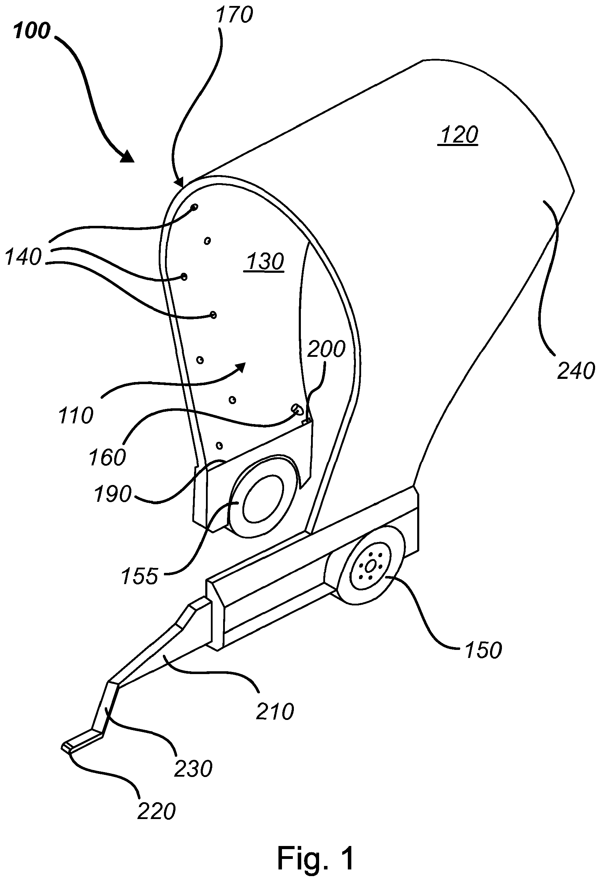

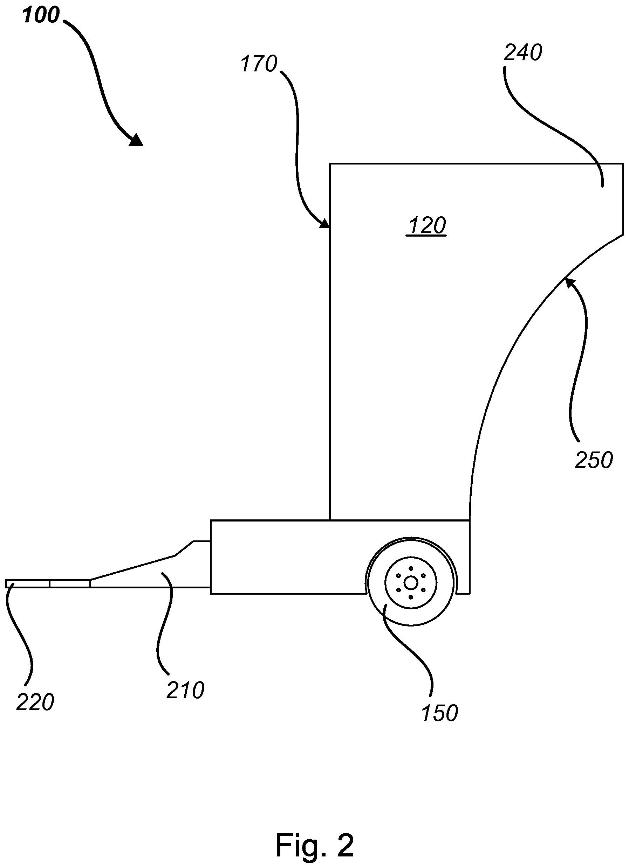

With reference to FIGS. 1 and 2, an embodiment of the present disclosure comprises spray recapture shell 100. In the embodiment depicted, shell 100 comprises a curved horseshoe arch shape, being laterally narrower at its bottom than at its mid-span. Shell 100 comprises a covering that partially encompasses a target space 110. In alternative embodiments, the surface of shell 100 comprises a curved or angular-shaped arch. In alternative embodiments, shell 100 comprises a shape and size appropriate to partially or fully contain an intended target object. Spray recapture shell 100 comprises external shell surface 120. Shell 100 may selectively be sized to correspond to a target object. For example, if the target objects comprise trees having a typical height of 6,1m (20 feet), an embodiment of shell 100 may be used that has an approximate height of slighter greater than 6,1m (20 feet).

In embodiments, external shell surface 120 comprises a skin material that has resistance to ultraviolet light and/or other elements to which the shell 100 may be exposed. In embodiments, external shell surface 120 comprises a metal skin. In alternative embodiments, external shell surface 120 comprises other resistant and/or durable materials of manufacture. External shell surface 120 may comprise composites of various materials, including metal/plastic composites. In embodiments, inner skin surface 130 comprises a solvent-resistant material such as polyethylene, for example high density polyethylene ("HDPE"). In alternative embodiments, inner skin surface 130 may comprise other chemical-resistant materials, depending on the anticipated use. Alternative embodiments comprise an inner skin surface 130 manufactured from stainless steel.

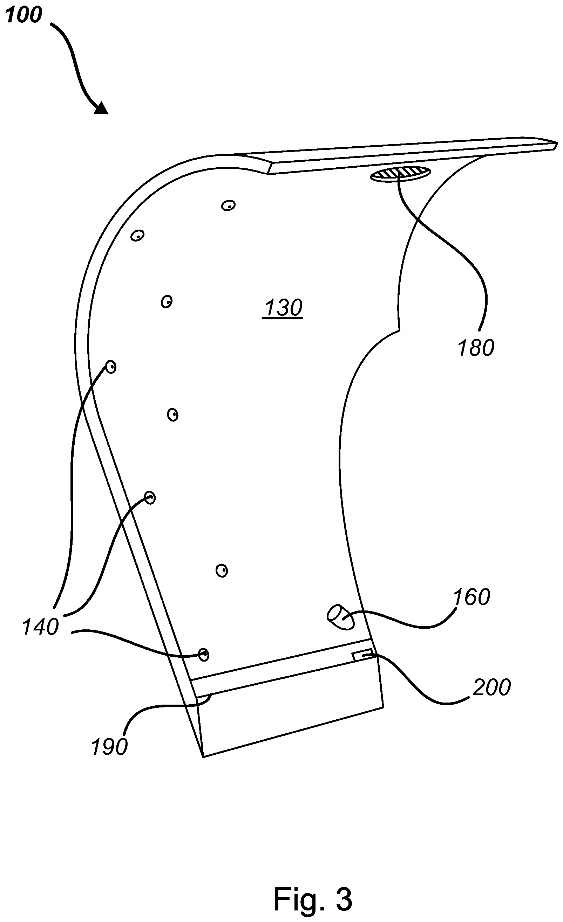

As depicted in FIG. 3, spray recapture shell 100 comprises spray nozzles 140. In the embodiment depicted, spray nozzles 140 are staggered in two rows around the inner surface 130 of spray recapture shell 100. In the embodiment depicted, each row of spray nozzles 140 roughly lies in a plane that is normal to spray recapture shell's 100 direction of travel. In the embodiment depicted, the distribution of spray nozzles 140 around the inner surface 130 of the spray recapture shell 100 provides approximately 270 degrees of encompassment around the target space 110. In alternative embodiments, a spray recapture shell having a narrower gap between the wheels 150, 155 may have a greater encompassing angle and may nearly approach 360 degrees. Conversely, a wider gap between wheels 150, 155 may translate into a lower encompassing angle. In other embodiments, spray nozzles 140 are distributed in alternative patterns on inner surface 130. As shown in FIG. 1, wheels 150, 155 have free-rotation from each other.

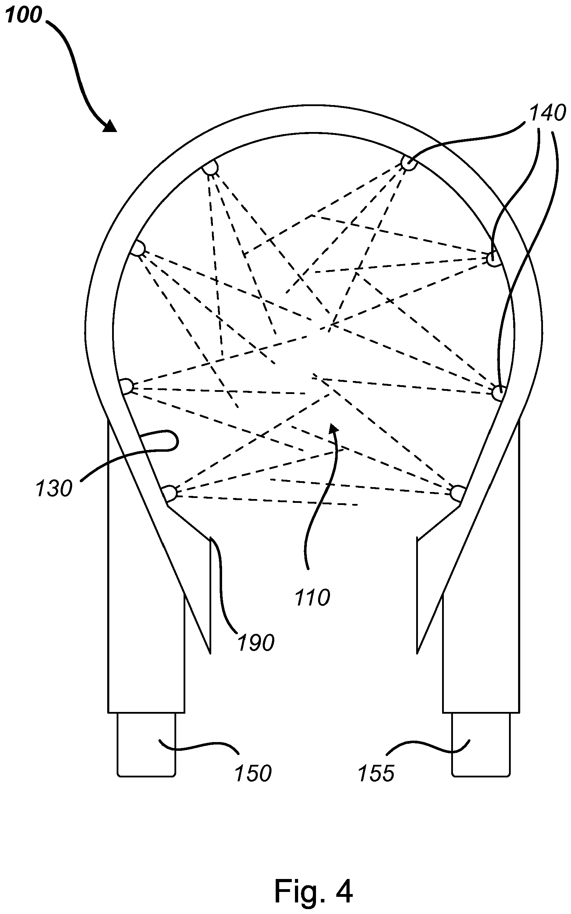

In the embodiment depicted in FIG. 4, spray nozzles 140 are each directed off center within shell 100 by roughly 15 degrees. Such offset of spray nozzles 140 may provide increased circulation of spray within recapture shell 100. In alternative embodiments, spray nozzles 140 are offset at other angles. In another embodiment, spray nozzles 140 have no offset and are accordingly directed at an approximate center of spray recapture shell 100. In other embodiments, spray nozzles 140 are adjustable to meet any local requirements or uses of spray shell 100.

Referring now to FIGS. 1 and 3, spray recapture shell 100 further comprises air nozzles 160 located on inner surface 130. In the embodiment depicted, air nozzles 160 are located near the rear of shell 100 and near the bottom of shell 100. Air nozzles 160 are directed upward and forward toward a leading edge 170 of spray recapture shell 100. In alternative embodiments, air nozzles 160 are located at other points on spray recapture shell 100 that allow air nozzles 160 to direct a stream of air toward leading edge 170.

Air nozzles 160 are in fluid communication with an air compressor, which is adapted to supply a stream of air through a network of hoses to air nozzles 160. The air compressor may be located on or within spray recapture shell 100 or on a tow vehicle such as a tractor. For applications where a high degree of air movement is called for, such as a shell 100 having a relative large target space 110, multiple air compressors may be used. Alternatively, air flow through nozzles 160 are driven by an air generator or blower assembly.

As depicted in FIG. 3, recapture port 180 is located at or near the top of the inner surface 130 near the rear of spray recapture shell 100. In alternative embodiments, recapture ports 180 are located at other locations on inner surface 130 in spray recapture shell 100. Recapture port 180 is in fluid communication with a vacuum mechanism and with a recapture tank. The recapture tank may be located on spray recapture shell 100 or on a tow vehicle.

Spray recapture shell 100 comprises drip catch edge 190 at lower edges of inner surface 130. Drip catch edge 190 comprises a small flange along a bottom edge of inner surface 130 and is adapted to channel drips to drip catch inlet 200. Drip catch inlet 200 is in fluid communication with one or more internal hoses connected to a collection tank and/or pump to recirculate drippage from the inner surface 130. Drippage may be pumped to a drip holding tank, filtered and stored at a central spray tank, and/or pumped back to spray nozzles for reapplication to a target object.

Referring now to FIG. 1, spray recapture shell 100 comprises tow tongue 210. Tow tongue comprises tow hitch 220 with offset 230 to create sufficient clearance between a tow vehicle and each target object. The size of tow offset 230 may be determined by the size of target objects, the size of tow vehicle, and/or the size of spray recapture shell 100.

As depicted in FIG. 2, spray recapture shell 100 comprises an extended tail section 240. Tail section 240 overhangs beyond target space 110 and comprises curved cutout 250. In other embodiments, tail section 240 and cutout 250 comprise alternative shapes and forms, such as a non-curved rear edge.

Embodiments of the spray recapture shell 100 comprise skeleton frame members (not depicted). Frame members may be sandwiched between inner shell surface 130 and external shell surface 120 to provide structural rigidity to shell 100 to transmit forward-motion forces across the structure of shell 100. Angle iron or other durable and sufficiently strong material may be used for frame members.

A tank to hold chemical spray, fluid pump for pressurizing the chemical spray, air compressor, and/or additional equipment may be located on towing vehicle or on the spray recapture shell. Such equipment may be powered by the PTO or other source of power.

Alternative embodiments comprise a trimmer device at the leading edge of spray recapture shell 100, so that any plants that comprise target object may be trimmed if they might not otherwise fit within target space 110. The trimmer device may be powered by a power take off ("PTO") shaft from a tow vehicle, by hydraulic power driven by the PTO, or other source of power.

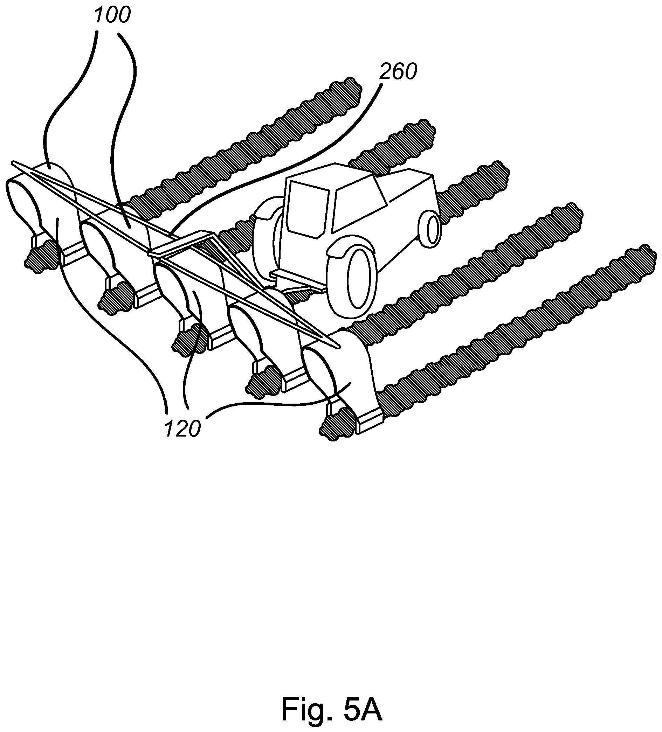

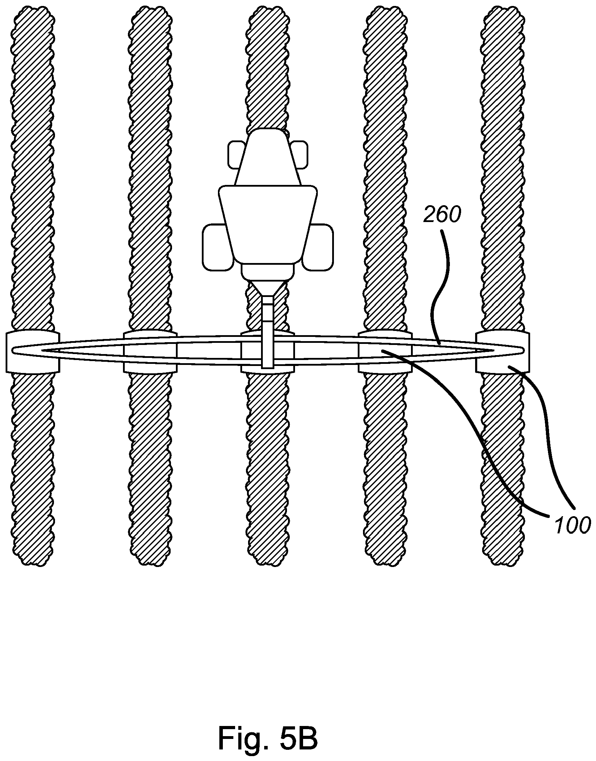

As depicted in FIGS. 5A and 5B, embodiments of the present disclosure comprise multiple spray recapture shells 100 fixed along a support structure 260, so that multiple rows of target objects may be sprayed at a time. Such embodiments may not include wheels, but hang freely from support structure 260. In embodiments, external surface 120 and internal surface 130 may comprise a relatively flexible material. Any selected number of spray recapture shells 100 may be thus fixed to each other in order to meet particular circumstances and factors.

In embodiments of the present disclosure, hydraulic power driven by PTO or other power source may be applied to drive the outside wheel 155. A converter may speed up or slow down the outer wheel 155 to compensate for turning or other speeds of tow vehicle. Alternatively, outer wheel 155 may be powered by an electric motor or other means.

In operation, spray recapture shell 100 is towed by tow vehicle through an orchard, field, or other location where one or more objects are to be sprayed. Due to the tow hitch offset 230, spray recapture shell 100 may not be directly behind tow vehicle, but rather is too one side thereof. Accordingly, tow vehicle may drive along a row of trees or other target objects and spray recapture shell 100 may pass over the top of each target object, with wheels 150, 155 straddling the target object. As spray recapture shell 100 approaches a row of target objects, an operator may activate a spray pump, vacuum pump, and air compressor.

Air nozzles 160 eject a stream of air directed near the front of spray recapture shell 100. Recapture port 180 apply suction from an air vacuum mechanism. As a result of such action at air nozzles 160 and recapture port 180, a front of higher-than ambient air pressure is created at the front edge 170 of the target space 110 encompassed by spray recapture shell 100 and a front of lower-than ambient pressure is created at the rear edge of the target space 110 encompassed by spray recapture shell 100. A zone of neutral pressure may be created within the target space 110 between the high-pressure front and the low-pressure front. The higher-than ambient air pressure front generally defines a transition zone across the front opening of spray recapture shell 100 and may act as a barrier to prevent ingress of bulk ambient air as the spray recapture shell 100 moves forward. Accordingly, a substantially isolated pocket of circulating air may be maintained within the target space 110, so as to minimize or reduce the potential for air that is circulating within the target space 110 to drift out of the spray recapture shell 100.

A spray pump pressurizes the chemical composition stored in the spray tank and thereby causes spray nozzles 140 to spray chemical. As air within the partially-enclosed target space 110 is circulating, sprayed chemical may be carried around within the space 110 and into any target object therein. Some amount of the sprayed chemical may stick to various surfaces of the target object. Due to the recirculation of air within the target space 110, the chemical spray may come into contact with a relatively high amount of surface of the target object. Suction from recapture port 180 may pull overspray into port 180 for recirculation, recycling, or storage. Chemical spray that contacts an inner surface 130 may drip downward and be channeled through drip catch edge 190 to drip catch inlet 200. Embodiments of the present disclosure comprise a drip catch pump, which pressurizes liquids that entered drip catch inlet 200 and transmits such liquids through one or more filters, back into chemical storage tank, back to spray nozzles to re-spray, and/or into a drip holding tank.

According to embodiments of the present disclosure, recapture shell 100 may be used to spray chemical in agricultural application on trees, vineyards, smaller crops, or other types of agricultural uses. Alternative embodiments of the present disclosure may be utilized for spraying paint in automotive, aerospace, or like applications. Embodiments may be used for spraying de-icing spray in aerospace or like applications, spraying paint on road surfaces, or other applications wherein a spray may be applied to a target object.

As would be understood by one of ordinary skill in the art having the benefit of this disclosure, advantages of embodiments disclosed herein may include usage of lower pressures and/or lower volumes of chemicals than traditional sprayers, while achieving as good or better overall coverage on target objects. Thus, application of embodiments disclosed herein may result in lower cost and decreased environmental harm. Additionally, the spray recapture shell 100 may allow application of spray in high-wind environments which may not be feasible with current technology. For example, spray recapture shell 100 may shelter the target space 110 from disturbance by side winds. Airflow rates from air nozzle 160 may be adjusted to compensate for high front- or rear-facing winds.

Although the present disclosure uses terms of certain embodiments, other embodiments will be apparent to those of ordinary skill in the art having the benefit of this disclosure, including embodiments that do not provide all of the benefits and features set forth herein, which are also within the scope of this disclosure. It is to be understood that other embodiments may be utilized, without departing from the scope of the present disclosure.

## Claims

1. A spray recapture shell (100), comprising:
an outer shell surface having a partially-encompassed spray volume;
at least one spray nozzle (140) on an inside surface of the spray recapture shell (100);
air nozzles (160) configured to eject a stream of air directed near the front of the spray recapture shell (100);
**characterised in that** the spray recapture shell (100) further comprises:
a recapture port (180) configured to apply suction from an air vacuum mechanism; and
wherein the air nozzles and recapture port are configured such that a front edge (170) of the partially-encompassed spray volume (110) has a higher-than ambient pressure and a rear edge of the partially-encompassed spray volume (110) has a lower-than ambient pressure.

2. The spray recapture shell of Claim 1, further comprising a lower edge of the partially-encompassed spray volume (110) having a pressure substantially equivalent to ambient pressure.

3. The spray recapture shell of Claim 1, further comprising a drip catch (200) substantially parallel to a forward direction of the spray recapture shell.

4. The spray recapture shell of Claim 1, further comprising a forward-facing air jet (160) on an inside surface of the spray recapture shell (100).

5. The spray recapture shell of Claim 1, wherein:
the at least one spray nozzle (140) lies on a plane defined as a lateral cross-section of the spray recapture shell and
the at least one spray nozzle (140) is directed at an off-center point of the lateral cross-section.

6. The spray recapture shell (100) of Claim 1, further comprising at least two wheels (150, 155) comprising free-rotation from each other.

7. The spray recapture shell (100) of Claim 1, further comprising multiple spray recapture shells (100) fixed along a lateral axis.

8. The spray recapture shell (100) of Claim 1, wherein the outer shell surface (120) comprises an arch shape having a lower end and a mid-span, and wherein the lower end is laterally narrower than the mid-span.

9. The spray recapture shell (100) of Claim 1, further comprising a curved cut-out (250) at a lower trailing edge of the outer shell surface (120).

10. A method of spraying a target object using the spray recapture shell (100) as claimed in claim 1, comprising:
moving said shell (100) to partially encompass the target object within a partially-encompassed spray volume (110);
creating a front edge of the partially-encompassed spray volume (110) having a higher-than ambient pressure;
creating a rear edge of the partially-encompassed spray volume (110) having a lower-than ambient pressure; and
applying a spray to the target object.

## Patentansprüche

1. Sprühmittel-Wiederaufnahmegehäuse (100) mit:
einer äußeren Gehäuseoberfläche mit einem teilweise umfassten Sprühmittelvolumen;
mindestens einer Sprühdüse (140) an einer Innenfläche des Sprühmittel-Wiederaufnahmegehäuses (100);
Luftdüsen (160), die zum Ausstoßen eines Luftstroms konfiguriert sind, der in die Nähe der Vorderseite des Sprühmittel-Wiederaufnahmegehäuses (100) gerichtet ist;
**dadurch gekennzeichnet, dass** das Sprühmittel-Wiederaufnahmegehäuse (100) des Weiteren aufweist:
eine Wiederaufnahmeöffnung (180), die zum Aufbringen von Saugkraft von einem Luftvakuummechanismus konfiguriert ist; und
wobei die Luftdüsen und die Wiederaufnahmeöffnung derart konfiguriert sind, dass eine Vorderkante (170) des teilweise umfassten Sprühmittelvolumens (110) einen höheren Druck als den Umgebungsdruck hat und eine Hinterkante des teilweise umfassten Sprühmittelvolumens (110) einen niedrigeren Druck als den Umgebungsdruck hat.

2. Sprühmittel-Wiederaufnahmegehäuse nach Anspruch 1, des Weiteren aufweisend eine untere Kante des teilweise umfassten Sprühmittelvolumens (110) mit einem Druck, der im Wesentlichen gleich dem Umgebungsdruck ist.

3. Sprühmittel-Wiederaufnahmegehäuse nach Anspruch 1, des Weiteren aufweisend einen Tropfenfänger (200), der im Wesentlichen parallel zu einer Vorwärtsrichtung des Sprühmittel-Wiederaufnahmegehäuses ist.

4. Sprühmittel-Wiederaufnahmegehäuse nach Anspruch 1, des Weiteren aufweisend einen nach vorne gerichteten Luftstrahl (160) an einer Innenfläche des Sprühmittel-Wiederaufnahmegehäuses (100).

5. Sprühmittel-Wiederaufnahmegehäuse nach Anspruch 1, wobei:
die mindestens eine Sprühdüse (140) auf einer Ebene liegt, die als ein seitlicher Querschnitt des Sprühmittel-Wiederaufnahmegehäuses definiert ist, und
die mindestens eine Sprühdüse (140) auf einen außerhalb der Mitte gelegenen Punkt des seitlichen Querschnitts gerichtet ist.

6. Sprühmittel-Wiederaufnahmegehäuse (100) nach Anspruch 1, des Weiteren aufweisend mindestens zwei Räder (150, 155), die eine voneinander freie Drehung aufweisen.

7. Sprühmittel-Wiederaufnahmegehäuse (100) nach Anspruch 1, des Weiteren aufweisend mehrere Sprühmittel-Wiederaufnahmegehäuse (100) für Sprühmittel, die entlang einer seitlichen Achse befestigt sind.

8. Sprühmittel-Wiederaufnahmegehäuse (100) nach Anspruch 1, wobei die äußere Gehäuseoberfläche (120) eine Bogenform mit einem unteren Ende und einer mittleren Spannweite aufweist, und wobei das untere Ende seitlich schmaler als die mittlere Spannweite ist.

9. Sprühmittel-Wiederaufnahmegehäuse (100) nach Anspruch 1, des Weiteren aufweisend einen gekrümmten Ausschnitt (250) an einer unteren Nachlaufkante der äußeren Gehäuseoberfläche (120).

10. Verfahren zum Besprühen eines Zielobjekts mittels des Sprühmittel-Wiederaufnahmegehäuses (100) nach Anspruch 1, aufweisend:
Bewegen des Gehäuses (100), um das Zielobjekt in einem teilweise umfassten Sprühmittelvolumen (110) teilweise zu umfassen;
Erzeugen einer Vorderkante des teilweise umfassten Sprühmittelvolumens (110) mit einem höheren Druck als dem Umgebungsdruck;
Erzeugen einer Hinterkante des teilweise umfassten Sprühmittelvolumens (110) mit einem niedrigeren Druck als dem Umgebungsdruck; und
Aufbringen eines Sprühmittels auf das Zielobjekt.

## Revendications

1. Coque de pulvérisation à récupération (100), comprenant :
une surface de coque extérieure présentant un volume de pulvérisation partiellement englobé ;
au moins une buse de pulvérisation (140) sur une surface intérieure de la coque de pulvérisation à récupération (100) ;
des buses d'air (160) configurées pour éjecter un flux d'air dirigé à côté du devant de la coque de pulvérisation à récupération (100) ;
**caractérisée en ce que** la coque de pulvérisation à récupération (100) comprend en outre :
un orifice de récupération (180) configuré pour appliquer une aspiration à partir d'un mécanisme de vide d'air ; et
dans laquelle les buses d'air et l'orifice de récupération sont configurés de telle sorte qu'un bord avant (170) du volume de pulvérisation partiellement englobé (110) présente une pression supérieure à la pression ambiante et un bord arrière du volume de pulvérisation partiellement englobé (110) présente une pression inférieure à la pression ambiante.

2. Coque de pulvérisation à récupération selon la revendication 1, comprenant en outre un bord inférieur du volume de pulvérisation partiellement englobé (110) qui présente une pression sensiblement équivalente à la pression ambiante.

3. Coque de pulvérisation à récupération selon la revendication 1, comprenant en outre un attrape-gouttes (200) sensiblement parallèle à une direction vers l'avant de la coque de pulvérisation à récupération.

4. Coque de pulvérisation à récupération selon la revendication 1, comprenant en outre un jet d'air faisant face vers l'avant (160) sur une surface intérieure de la coque de pulvérisation à récupération (100).

5. Coque de pulvérisation à récupération selon la revendication 1, dans laquelle :
l'au moins une buse de pulvérisation (140) repose sur un plan défini comme une section transversale latérale de la coque de pulvérisation à récupération et l'au moins une buse de pulvérisation (140) est dirigée vers un point excentré de la section transversale latérale.

6. Coque de pulvérisation à récupération (100) selon la revendication 1, comprenant en outre au moins deux roues (1 50, 1 55) qui comprennent une rotation libre l'une par rapport à l'autre.

7. Coque de pulvérisation à récupération (100) selon la revendication 1, comprenant en outre de multiples coques de pulvérisation à récupération (100) fixées le long d'un axe latéral.

8. Coque de pulvérisation à récupération (100) selon la revendication 1, dans laquelle la surface de coque extérieure (120) comprend une forme d'arc présentant une extrémité inférieure et une portée médiane, et dans laquelle l'extrémité inférieure est latéralement plus étroite que la portée médiane.

9. Coque de pulvérisation à récupération (100) selon la revendication 1, comprenant en outre une découpe courbée (250) au niveau d'un bord de fuite inférieur de la surface de coque extérieure (120).

10. Procédé de pulvérisation d'un objet cible à l'aide de la coque de pulvérisation à récupération (100) selon la revendication 1, consistant à :
déplacer ladite coque (100) pour englober partiellement l'objet cible à l'intérieur d'un volume de pulvérisation partiellement englobé (110) ;
créer un bord avant du volume de pulvérisation partiellement englobé (110) présentant une pression supérieure à la pression ambiante ;
créer un bord arrière du volume de pulvérisation partiellement englobé (110) présentant une pression inférieure à la pression ambiante ; et
appliquer une pulvérisation à l'objet cible.
